Europäisches Patentamt

European Patent Office

Office européen des brevets

(11) Veröffentlichungsnummer: **0 119 567**
**A1**

(12) EUROPÄISCHE PATENTANMELDUNG

(21) Anmeldenummer: 84102627.1

(22) Anmeldetag: 10.03.84

(51) Int. Cl.³: **G 02 B 7/26**

(30) Priorität: 18.03.83 DE 3309783

(43) Veröffentlichungstag der Anmeldung: 26.09.84
Patentblatt 84/39

(84) Benannte Vertragsstaaten: **CH DE FR GB IT LI**

(71) Anmelder: **Licentia Patent-Verwaltungs-GmbH,
Theodor-Stern-Kai 1, D-6000 Frankfurt/Main 70 (DE)**

(72) Erfinder: **Weidel, Edgar, Dipl.-Phys., Hudlerstrasse 25,
D-7913 Senden (DE)**
Erfinder: **Hillerich, Bernd, Dipl.-Phys., Burgunderweg 9,
D-7900 Ulm (DE)**

(74) Vertreter: **Amersbach, Werner, Dipl.-Ing. et al, Licentia
Patent-Verwaltungs-GmbH Theodor-Stern-Kai 1,
D-6000 Frankfurt 70 (DE)**

(54) Wellenlängenmultiplexer bzw. Wellenlängendemultiplexer.

(57) Der erfindungsgemäße optische Wellenlängenmultiplexer
bzw. -demultiplexer besteht aus einem im wesentlichen ebenen Wellenleiter, an den ein aus Eingangs- und/oder Ausgangslichtwellenleitern bestehendes Faserarray, ein Reflektor
und ein Reflektionsbeugungsgitter unmittelbar angekoppelt
sind. Durch Aberration korrigierende Maßnahmen, z.B. durch
Verwenden eines «chirped grating» ist es möglich, optische
Übertragungsverluste und/oder ein Übersprechen zu vermeiden.

EP 0 119 567 A1

0119567

Licentia Patent-Verwaltungs-GmbH
Theodor-Stern-Kai 1
D-6000 Frankfurt 70

PTL-UL/Ja/lh
UL 83/29
Aktz.: P 33 09 783.6

Beschreibung

Wellenlängenmultiplexer bzw. Wellenlängendemultiplexer

Die Erfindung betrifft einen Wellenlängenmultiplexer bzw.
Wellenlängendemultiplexer nach dem Oberbegriff des Patentanspruchs 1.

Die Erfindung betrifft insbesondere optische Wellenlängenmultiplexer bzw. -demultiplexer, die für die optische
Nachrichtenübertragungstechnik, insbesondere unter Verwendung von Lichtwellenleitern, anwendbar sind. Ein optischer
Wellenlängenmultiplexer bewirkt, daß mehrere optische
Informationskanäle, beispielsweise im wesentlichen monochromatisches Licht unterschiedlicher Wellenlänge führende
optische Glasfasern, zu einem optischen Informationskanal,
beispielsweise ebenfalls einer optischen Glasfaser, zusammengefaßt werden. Ein optischer Wellenlängendemultiplexer

...

0119567

UI. 83/29

bewirkt das Gegenteil, also eine Aufteilung eines optischen Informationskanales, in dem ein Wellenlängengemisch vorhanden ist, in mehrere optische Informationskanäle. Derartige optische Anordnungen verwenden ein wellenlängenselektives optisches Bauelement, z.B. ein optisches Beugungsgitter. Eine Schwierigkeit besteht darin, den optischen Strahlengang der verwendeten Bauelemente, z.B. Beugungsgitter bzw. Glasfaser, möglichst mit einfachen und billig herstellbaren Mitteln im wesentlichen verlustlos aneinander anzupassen.

Aus der DE-OS 31 22 781 ist eine Anordnung bekannt, bei der an einem transparenten Träger, z.B. einem scheibenförmigen Glaskörper, ein Reflexionsbeugungsgitter, mindestens ein optischer Reflektor und ein sogenanntes Faserarray angekoppelt ist, das aus nebeneinanderliegenden Lichtwellenleitern besteht. Die Ankopplung des Faserarrays erfolgt durch eine Zylinderlinse und/oder eine Spiegeloptik.

In einer derartigen Anordnung sind in nachteiliger Weise optische Abbildungsfehler, z.B. Aberration und/oder Koma, vorhanden, die insbesondere zu optischen Verlusten und/oder Übersprechen bei der Nachrichtenübertragung führen. Diese Abbildungsfehler sind beispielsweise besonders störend, wenn das Faserarray aus sogenannten Monomode-Lichtwellenleitern besteht, deren lichtführender Kern einen Durchmesser von einigen Wellenlängen des zu übertragenden Lichts besitzt. Dieser Durchmesser liegt z.B. im Bereich von 5 µm bis 10 µm und erfordert daher eine sehr genaue Abbildung, wenn die erwähnten Störungen vermieden werden sollen.

...

Der Erfindung liegt daher die Aufgabe zugrunde, betriebssichere und kostengünstig herstellbare Wellenlängenmultiplexer bzw. Wellenlängendemultiplexer anzugeben, die eine weitgehend verlustlose Ankopplung an möglicherweise unterschiedliche Lichtwellenleiter innerhalb eines möglichst großen Wellenlängenbereichs (möglichst großes "flat top") gestatten dere eine verlustarme Lichtübertragung von dem (den) Eingangslichtwellenleiter(n) auf den (die) Ausgangslichtwellenleiter ermöglichen.

Diese Aufgabe wird gelöst durch die im kennzeichnenden Teil des Patentanspruchs 1 angegebenen Merkmale. Ausgestaltungen und Weiterbildungen der Erfindung sind den Unteransprüchen entnehmbar.

Die Erfindung beruht auf der Erkenntnis, daß die erwähnten optischen Verluste und/oder Störungen im wesentlichen durch die optische Aberration entstehen.

Die Erfindung wird im folgenden anhand von Ausführungsbeispielen unter Bezugnahme auf schematische Zeichnungen näher erläutert. Es zeigen:

FIG. 1 bzw. 2    Aufsicht bzw. Seitenansicht eines ersten Ausführungsbeispiels

FIG. 3 bis 5    schematische Darstellungen zur Erläuterung weiterer Ausführungsbeispiele

0119567

Zur Wahrung einer besseren Übersichtlichkeit bezieht sich die folgende Erläuterung lediglich auf Wellenlängendemultiplexer. Bei den entsprechenden Wellenlängenmultiplexern ist es lediglich erforderlich, den optischen Strahlengang umzukehren.

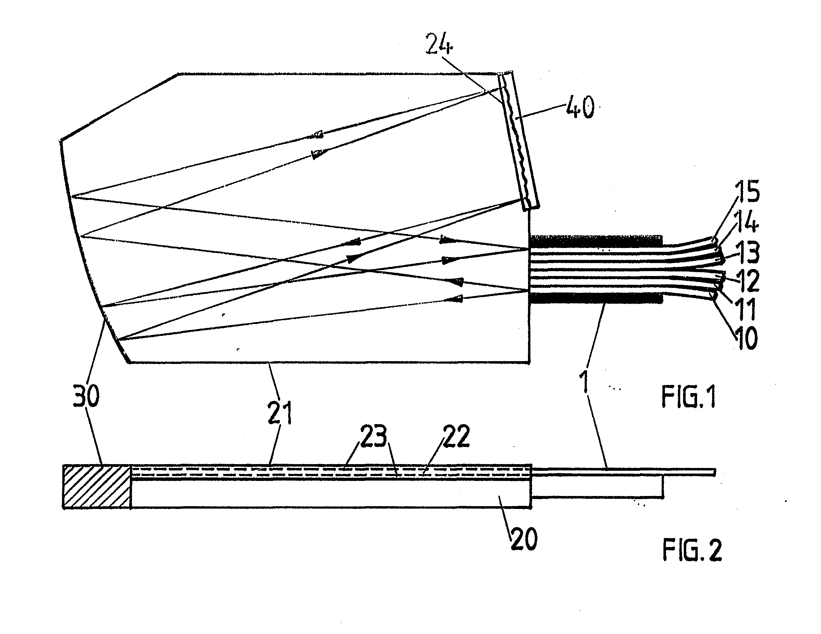

Die Figuren 1 und 2 zeigen ein in einer Fassung gehaltenes Faserarray 1, das aus den Lichtwellenleitern 10 bis 15 besteht. Der mit 10 bezeichnete Lichtwellenleiter dient als Eingangslichtwellenleiter und führt Licht, das die Wellenlängen $\lambda 1$ bis $\lambda 5$ enthält. Die mit 11 bis 15 bezeichneten Lichtwellenleiter dienen als Ausgangslichtwellenleiter und führen im wesentlichen monochromatisches Licht, das eine der Wellenlängen $\lambda 1$ bis $\lambda 5$ enthält. Das Faserarray 1 ist derart an einem Träger 20 befestigt, z.B. geklebt, daß eine optische Kopplung zwischen dem Faserarray 1 und einem auf dem Träger 20 angebrachten ebenen Wellenleiter 21 vorhanden ist. Der ebene Wellenleiter 21 führt Licht, das durch Pfeile dargestellt ist, zu einem optischen Reflektor 30, z.B. einer reflektierenden Metallschicht, und zu einem ebenen Reflexionsbeugungsgitter 40. Der ebene Wellenleiter 21 besteht aus einer lichtführenden ebenen Kernschicht 22, die den Brechungsindex $n_k$ besitzt, und aus diese umgebende Mantelschichten 23, die den Brechungsindex $n_m$ besitzen. Ist $n_k > n_m$, so wird das in die Kernschicht 22 eingestrahlte Licht an den Grenzflächen zur Mantelschicht total reflektiert. Es entsteht eine Lichtführung wie in einem Lichtwellenleiter, jedoch lediglich in einer Dimension. Der Leitungstyp, d.h. ein - oder vielwellige Lichtführung, des ebenen Wellenleiters 21 ist an den Leitungstyp des Faserarrays 1 anpaßbar durch einen entsprechenden Schichtaufbau des Wellenleiters 21. So ist

. . .

beispielsweise ein Stufenprofil – oder Gradientenprofil-wellenleiter herstellbar durch Diffusions- und/oder CVD-Verfahren, die in der Lichtleiter-Technologie angewandt werden. Da das Licht lediglich in dem ebenen Wellenleiter 21 geführt wird, ist die Ausgestaltung des Trägers 20 in weiten Grenzen frei wählbar. So ist es beispielsweise möglich, den Träger 20 aus einem Material herzustellen, das der Mantelschicht 23 entspricht. Alternativ dazu ist es möglich, den Träger 20 als einen sogenannten optischen Sumpf auszubilden, der störendes Licht, z.B. gestreutes Licht, absorbiert.

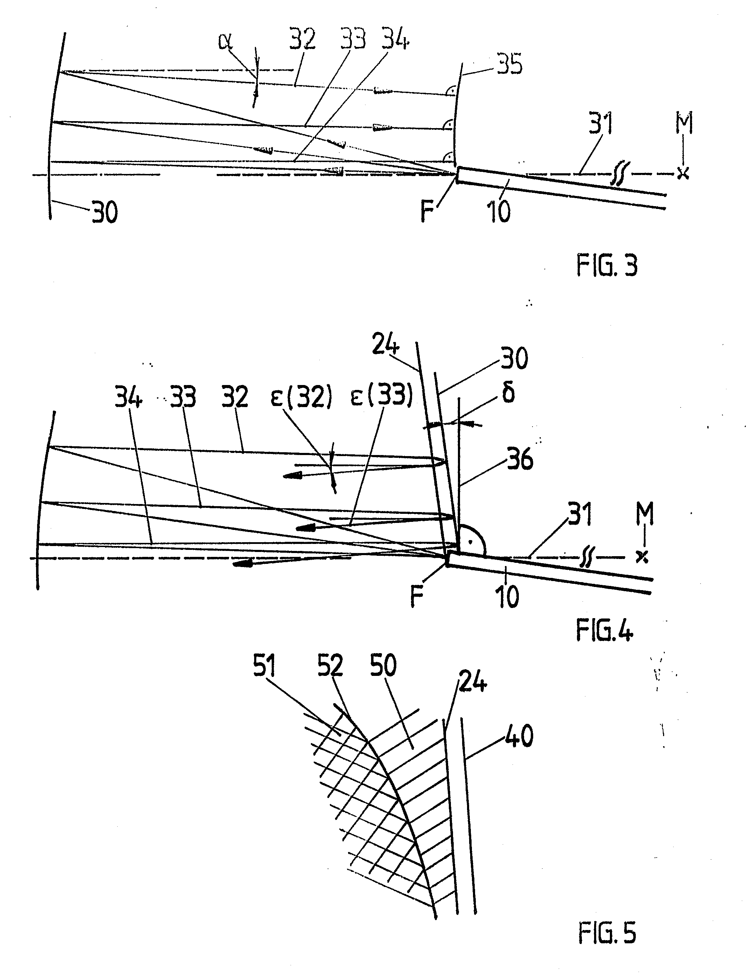

Bei einem Wellenlängendemultiplexer wird das in dem Lichtwellenleiter 10 ankommende Wellenlängengemisch durch den ebenen Wellenleiter 21 zum Reflektor 30 geführt, dort kollimiert und dann durch den Wellenleiter 21 dem Reflektionsbeugungsgitter 40, z.B. einer geätzten Silizium-Einkristallscheibe, zugeleitet. Das Reflektionsbeugungsgitter 40 zerlegt das Wellenlängengemisch in die einzelnen Bestandteile, z.B. monochromatisches Licht der Wellenlängen $\lambda_1$ bis $\lambda_5$, die durch den Reflektor 30 in die Ausgangslichtwellenleiter, z.B. die Lichtwellenleiter 11 bis 15, eingekoppelt werden. Bei einer derartigen Anordnung mit einem sphärisch ausgebildeten Reflektor 30 sind optische Verluste auf die optische Aberration zurückführbar, die anhand der FIG. 3 erläutert wird.

FIG. 3 zeigt einen sphärischen Reflektor 30 mit optischer Achse 31, Brennpunkt F und zugehörigem Krümmungsmittelpunkt M. Das in einem Lichtwellenleiter 10, z.B. dem Eingangslichtwellenleiter, geführte Licht verläßt diesen aus einer Endfläche, die sich im Brennpunkt F befindet.

...

0119567

Nach der Reflexion des Lichts am Reflektor 30 entsteht ein Strahlenbündel, das aus nicht genau parallelen Strahlen 32, 33, 34 besteht. Die Strahlen bilden mit der optischen Achse 31 einen Winkel $\alpha$ , der ungleich Null ist. Der achsnahe Strahl 34 ist ungefähr parallel zur optischen Achse 31, für den Strahl 34 ist der Winkel $\alpha$ daher ungefähr gleich Null. Ein achsferner Strahl 32 besitzt dagegen einen Winkel $\alpha$ , der von Null verschieden ist. Mit 35 ist eine Linie konstanter optischer Phase bezeichnet, auf der die Strahlen 32, 33, 34 senkrecht stehen. Diese Linie ist bei einem sphärischen Reflektor 30 keine Gerade wie bei einem genau parallelen Strahlenbündel, sondern gekrümmt. Werden diese nicht parallelen Strahlen 32, 33, 34 einem Reflexionsbeugungsgitter zugeführt, so besitzen die dort reflektierten Strahlen ebenfalls unterschiedliche Reflexionswinkel. Werden nun gemäß FIG. 1 diese Strahlen durch den Reflektor 30 auf die Ausgangslichtwellenleiter des Faserarrays 1 abgebildet, so ist der Ort dieser Abbildung verschieden für die Strahlen 32, 33, 34 und es treffen möglicherweise nicht alle Strahlen am Ort des lichtführenden Kerns des Lichtwellenleiters auf. Eine derart fehlerhafte Abbildung führt zu störenden optischen Übertragungsverlusten, zu Übersprechen und zu einer Verkleinerung des Wellenlängenbereiches, in dem Übertragungsverluste möglichst gering sind. Dieser Wellenlängenbereich wird auch als "flat top" bezeichnet. Diesbezügliche Korrekturmöglichkeiten werden in den folgenden Beispielen erläutert.

Beispiel 1:
Bei diesem Beispiel ist der Reflektor 30 als sphärische zylindrisch konvexe Fläche ausgebildet und der Wellenleiter 21 besitzt vor dem Reflexionsbeugungsgitter 40 eine im

...

wesentlichen plane Endfläche 24 (FIG. 1). Dann ist gemäß FIG. 3 $\alpha(32) \neq \alpha(33) \neq \alpha(34)$. Gemäß FIG. 4 haben die Strahlen nach der Beugung an dem Reflexionsbeugungsgitter 30 zur optischen Achse 31 Winkel $\varepsilon(i)$, i = laufender Parameter, die vom Neigungswinkel $\delta$ des Reflexionsbeugungsgitters 30 abhängig sind. Dabei wird der Neigungswinkel $\delta$ gemessen zwischen dem Reflexionsbeugungsgitter 30 und der Normalen 36 zur optischen Achse 31. Die Endfläche 24 ist im wesentlichen parallel ausgerichtet zum Reflexionsbeugungsgitter 30. Die Winkel $\varepsilon(i)$ lassen sich berechnen gemäß der Formel

$$\varepsilon(i) = \delta - \sin^{-1}\left(\frac{1}{n_k} \sin k(i)\right), \text{ mit}$$

$$k(i) = \sin^{-1}((\lambda/g) - n_k \sin(\alpha(i) + \delta)).$$

Dabei bedeutet $\lambda$ die Wellenlänge des Lichts im Wellenleiter 21, g die Gitterkonstante des Reflexionsbeugungsgitters 30 und $n_k$ der effektive Brechungsindex des Wellenleiters 21. Aus den Formeln geht hervor, daß bei konstanter Wellenlänge $\lambda$ eine Änderung der Winkel $\varepsilon(i)$ erreichbar ist, wenn die Gitterkonstante g ortsabhängig geändert wird. Ein Beugungsgitter mit einer derartig ortsabhängigen Gitterkonstanten wird auch "chirped grating" genannt. Ist nun $\alpha(i) \neq \alpha(j)$ für i $\neq$ j wie bei einem sphärischen Reflektor, so wird durch eine ortsabhängige Änderung der Gitterkonstante g für alle Strahlen i, das heißt auch für die beispielhaft erwähnten Strahlen 32, 33, 34, erreicht, daß für alle Winkel $\varepsilon$ gilt $\varepsilon(i) = \varepsilon(j)$ für i $\neq$ j, also beispielsweise $\varepsilon(32) = \varepsilon(33) = \varepsilon(34)$. Damit ist die Aberration des sphärischen Spiegels kompensiert. Dies ist jedoch keine optimale Kompensation, da im Strahlengang bei der zweiten Reflexion am Reflektor 30 eine erneute Aberration auftritt. Diese erneute Aberration ist berechenbar, z.B. mit Hilfe strahlenverfolgender ("ray- tracing") Rechnungen, so daß eine entsprechende ortsabhän-

...

gige Änderung der Gitterkonstanten g eine vollständige Kompensation ermöglicht. Der optimale Verlauf der ortsabhängigen Gitterkonstanten g ist dann gegeben, wenn sich für eine bestimmte Wellenlänge $\lambda$ alle Strahlen auf der Faserstirnfläche eines einzigen Ausgangslichtwellenleiters in möglichst kleinem Abstand voneinander treffen. Zur Vermeidung von optischen Verlusten solte diese Bedingung für alle Wellenlängen gelten, die in einem Wellenlängenmultiplexer bzw. -demultiplexer verwendet werden. Durch die Verwendung eines "chirped grating" ist es beispielsweise möglich, bei einem Faserarray 1 mit ungefähr sieben Ausgangslichtwellenleiters, die Aberration auf ein Zehntel ihres ursprünglichen Wertes zu verkleinern. Dieser geringe Wert ist nicht mehr störend, da die derartig korrigierten Strahlen innerhalb des optischen Akzeptanzkegels eines Ausgangslichtwellenleiters liegen.

Beispiel 2:
Wird statt des sphärischen Reflektors ein asphärischer, z.B. ein parabolischer, Reflektor verwendet, so gilt für alle Winkel $\alpha$ (i) (FIG. 3): $\alpha$ (i) = 0. Ganz allgemein wird durch einen parabolischen Reflektor ein vom Brennpunkt F ausgehendes divergentes Lichtbündel so reflektiert, daß alle reflektierten Strahlen zur Achse 31, die durch den Brennpunkt und den Scheitel der Parabel verläuft, parallel sind. Die Phasenfläche 35 in FIG. 3 ist eben. Nach der Beugung am Gitter verlaufen die reflektierten Strahlen nicht mehr parallel, sondern unter einen Winkel - abhängig von der Wellenlänge $\lambda$ - zur Achse 31. Die Strahlen werden vom Reflektor auf die Endflächen der Ausgangslichtwellenleiter fokussiert. Für Strahlen, die jedoch nicht achsenparallel sind, treten auch beim parabolischen Reflektor Abberationen auf, die störend

...

sein können. Zu einer Verringerung dieser Aberrationen kann mit Hilfe von ray-tracing Rechnungen eine optimale Reflektorform berechnet und hergestellt werden, die für nicht störende Aberrationen sorgt bei Berücksichtigung der Beugung und der zweimaligen Reflexion am Reflektor 30.

Beispiel 3:

Die bei Verwendung eines sphärischen Reflektors entstehende gekrümmte Phasenfläche 35 (FIG. 3) wird korrigiert durch eine vor dem Reflexionsbeugungsgitter 40 angeordnete gekrümmte Endfläche 24 des Wellenleiters 21 (FIG. 1). Bei der Endfläche 24 wird im wesentlichen die Richtung gekrümmt, die in der Ebene des Wellenleiters 21 liegt. Durch die erwähnten "ray-tracing" Rechnungen ist es möglich, die gekrümmte Endfläche 24 so auszubilden, daß im Strahlengang lediglich vernachlässigbare Aberrationen auftreten.

Beispiel 4:

Im Beispiel 3 wurde eine Korrektur der Phasenfläche 35 (FIG. 3) durchgeführt mit Hilfe einer gekrümmten Endfläche 24 des Wellenleiters 21. Alternativ dazu ist es möglich, die Endfläche 24 eben zu lassen und innerhalb des Wellenleiters 21, z.B. innerhalb der Kernschicht 22 (FIG. 2) oder mit Hilfe einer auf einen Teil der Oberfläche des Wellenleiters aufgebrachten Schicht, eine Änderung des effektiven Brechungsindexes des Wellenleiters zu erzeugen, z.B. durch einen Diffusionsvorgang und/oder einen Ionenimplantationsvorgang und/oder ein CVD-Verfahren. Diese ortsabhängigen Änderungen des Brechungsindexes bewirken unterschiedliche optische Wege. Dadurch entsteht ein Wellenleiter 21 mit einer ortsabhängigen Lichtgeschwindigkeit. Diese Eigenschaft wird mit Hilfe von "ray-tracing"-Rechnungen ausgenutzt, um die erforderliche Korrektur durchzuführen. FIG. 5 zeigt ein Ausführungsbeispiel eines ebenen Wellenleiters, dessen lichtführende Kernschicht im Bereich der Endfläche 24 (FIG. 1) Gebiete 50, 51 mit unterschiedlichem Brechungsindex besitzt. Die örtliche Lage der Begrenzung 52 zwischen den Gebieten 50, 51 ist entsprechend der gewünschten Korrektur hergestellt.

Die Erfindung ist nicht auf die Ausführungsbeispiele beschränkt, sondern auf weitere Beispiele anwendbar. So ist es möglich, Kombinationen der Korrekturen zu verwenden, die in den Beispielen beschrieben sind.

Licentia Patent-Verwaltungs-GmbH         PTL-UL/Ja/lh
Theodor-Stern-Kai 1                       UL 83/29
D-6000 Frankfurt 70

Patentansprüche

1. Wellenlängenmultiplexer bzw. Wellenlängendemultiplexer, bestehend aus einem Träger, an den ein Array von Lichtwellenleitern, insbesondere ein Faserarray, und/oder ein Photodiodenarray, ein optischer Reflektor sowie ein Reflexionsbeugungsgitter angekoppelt sind, gekennzeichnet durch die Kombination folgender Merkmale:

a)    der Träger (20) enthält einen im wesentlichen ebenen Wellenleiter (21), an den mindestens ein Lichtwellenarray (1) unmittelbar angekoppelt ist,

b)    das Reflexionsbeugungsgitter (40) ist als ebenes Beugungsgitter ausgebildet,

c)    das Reflexionsbeugungsgitter (40) und/oder der Wellenleiter (21) und/oder der Reflektor (30) sind optisch derart korrigiert, daß Abbildungsfehler verringert sind.

...

2. Wellenlängenmultiplexer bzw. Wellenlängendemultiplexer nach Anspruch 1, dadurch gekennzeichnet, daß das Reflexionsbeugungsgitter (40) als ebenes Beugungsgitter ausgebildet ist, das eine ortsabhängige Gitterkonstante besitzt ("chirped grating").

3. Wellenlängenmultiplexer bzw. Wellenlängendemultiplexer nach Anspruch 1 oder Anspruch 2, dadurch gekennzeichnet, daß der Reflektor (30) eine asphärische Reflexionsfläche besitzt.

4. Wellenlängenmultiplexer bzw. Wellenlängendemultiplexer nach einem der vorhergehenden Ansprüche, dadurch gekennzeichnet, daß der Wellenleiter (21) mindestens eine optisch korrigierende Endfläche (24) besitzt.

5. Wellenlängenmultiplexer bzw. Wellenlängendemultiplexer nach einem der vorhergehenden Ansprüche, dadurch gekennzeichnet, daß der Wellenleiter (21) in der Ausbreitungsebene des Lichts eine ortsabhängige Änderung des effektiven Brechungsindexes besitzt, die einen optisch korrigierten Strahlengang bewirkt.

6. Wellenlängenmultiplexer bzw. Wellenlängendemultiplexer nach Anspruch 5, dadurch gekennzeichnet, daß die ortsabhängige Änderung des Brechungsindexes durch Ionenimplantation und/oder durch ein Diffusionsverfahren hergestellt ist.

7. Wellenlängenmultiplexer bzw. Wellenlängendemultiplexer nach einem der vorhergehenden Ansprüche, dadurch gekennzeichnet, daß der Leitungstyp des Wellenleiters (21)

...

angepaßt ist an den Leitungstyp der Lichtwellenleiter des Faserarrays (1).

8.  Wellenlängenmultiplexer bzw. Wellenlängendemultiplexer nach einem der vorhergehenden Ansprüche, dadurch gekennzeichnet, daß der Wellenleiter (21) mindestens eine Endfläche (24) besitzt, auf der sich ein Antireflexbelag befindet.

9.  Wellenlängenmultiplexer bzw. Wellenlängendemultiplexer nach einem der vorhergehenden Ansprüche, dadurch gekennzeichnet, daß das Faserarray (1) mindestens einen Monomode-Lichtwellenleiter und/oder mindestens einen Gradienten-Lichtwellenleiter enthält.

...

FIG.1

FIG.2

0119567

2/2

FIG. 3

FIG. 4

FIG. 5

Europäisches
Patentamt

**EUROPÄISCHER RECHERCHENBERICHT**

0119567
Nummer der Anmeldung

EP 84 10 2627

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | EP-A-0 067 972 (LICENTIA PATENT-VERWALTUNGS-GmbH) * Zusammenfassung; Seite 4, Zeile 15 - Seite 5, Zeile 4; Abbildungen 1-4 * | 1,4,5 | G 02 B 7/26 |
| X | SOVIET JOURNAL OF QUANTUM ELECTRONICS, Band 12, Nr. 2, Februar 1982, Seiten 252-254, New York, USA; M.I. BELOVOLOV et al.: "Spectral demultiplexer with a plate waveguide" * Abbildung 1; Seite 254, rechte Spalte, Zeilen 8-17, 31-35 * | 1,3 | |
| X | PATENTS ABSTRACTS OF JAPAN, Band 4, Nr. 138(P-29)(620), 27. September 1980, Seite 46P29; & JP - A - 55 87925 (RITSUO HASUMI) 03.07.1980 | 1,4 | |
| A | APPLIED OPTICS, Band 21, Nr. 12, Juni 1982, Seiten 2195-2198, New York, USA; T. SUHARA et al.: "Integrated-optic wavelength multi- and demultiplexers using a chirped grating and an ion-exchanged waveguide" * Seite 2195, rechte Spalte, Zeile 26 - Seite 2196, linke Spalte, Zeile 9 * | 1,2 | |

RECHERCHIERTE SACHGEBIETE (Int. Cl. 3)

G 02 B 7/26
H 04 J 15/00
G 02 B 27/10
G 02 B 5/174

--- -/-

Der vorliegende Recherchenbericht wurde für alle Patentansprüche erstellt.

| Recherchenort | Abschlußdatum der Recherche | Prüfer |
|---|---|---|
| DEN HAAG | 19-06-1984 | BEAVEN G.L. |

Europäisches
Patentamt

**EUROPÄISCHER RECHERCHENBERICHT**

0119567
Nummer der Anmeldung

EP 84 10 2627

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | PATENTS ABSTRACTS OF JAPAN, Band 5, Nr. 21(P-48)(693), 7. Februar 1981, Seite 111P48; & JP - A - 55 149 911 (RITSUO HASUMI) 21.11.1980 | 1 | |
| A | PATENTS ABSTRACTS OF JAPAN, Band 4, Nr. 156(P-34)(638), 31. Oktober 1980, Seite 98P34; & JP - A - 55 105 211 (MATSUSHITA DENKI SANGYO K.K.) 12.08.1980 | 1 | |
| A | PATENTS ABSTRACTS OF JAPAN, Band 1, Nr. 107, 21. September 1977, Seite 3587E77; & JP - A - 52 38939 (NIPPON DENSHIN DENWA KOSHA) 25.03.1977 | 1,8 | |
| A | US-A-3 819 249 (LICENTIA PATENT-VERWALTUNGS-GmbH) * Spalte 3, Zeilen 10-19; Abbildungen 1-6 * | 1,4-6 | RECHERCHIERTE SACHGEBIETE (Int. Cl. 3) |
| A | US-A-4 153 330 (W.J. TOMLINSON III) * Zusammenfassung; Abbildung 1 * | 1,5 | |
| P,X | EP-A-0 093 396 (SIEMENS AG) * Zusammenfassung; Seite 4, Zeile 29 - Seite 5, Zeile 10; Abbildungen 8-11 * | 1,3 | |

Der vorliegende Recherchenbericht wurde für alle Patentansprüche erstellt.

| Recherchenort DEN HAAG | Abschlußdatum der Recherche 19-06-1984 | Prüfer BEAVEN G.L. |
|---|---|---|